# EUROPEAN PATENT SPECIFICATION

(11) **EP 2 787 335 B1**
(45) Date of publication and mention of the grant of the patent: **23.03.2016**
(21) Application number: 13162524.6
(22) Date of filing: 05.04.2013
(51) Int. Cl.: G01K 7/32, G01K 17/00

(54) **Hollow Micro String Based Calorimeter Device**
Hohles Kalorimeter auf Mikroschnurbasis
Calorimètre à base de chaîne de micro creux

(43) Date of publication of application: 08.10.2014
(73) Proprietor: Danmarks Tekniske Universitet, 2800 Lyngby (DK)
(72) Inventor: Khan, Muhammad Faheem, NW Edmonton Alberta T5H3G2, AB (CA); Schmid, Silvan, 2300 Copenhagen S (DK); Boisen, Anja, 3460 Birkerød (DK); Larsen, Tom, Palo Alto 94301 California (US)
(74) Representative: Plougmann Vingtoft a/s

(56) References cited:
- Wonhee Lee ET AL: "High-sensitivity microfluidic calorimeters for biological and chemical applications", , 8 September 2009 (2009-09-08), pages 15225-15230, XP055105078, DOI: 10.1073/pnas.0901447106 Retrieved from the Internet: URL:http://www.pnas.org/content/106/36/152 25.full.pdf+html [retrieved on 2014-03-03] & DATABASE INSPEC [Online] THE INSTITUTION OF ELECTRICAL ENGINEERS, STEVENAGE, GB; 8 September 2009 (2009-09-08), WONHEE LEE ET AL: "High-sensitivity microfluidic calorimeters for biological and chemical applications", Database accession no. 11371995 & PROCEEDINGS OF THE NATIONAL ACADEMY OF SCIENCES OF THE UNITED STATES OF AMERICA NATIONAL ACADEMY OF SCIENCES USA, vol. 106, no. 36, 8 September 2009 (2009-09-08), pages 15225-15230, ISSN: 0027-8424, DOI: 10.1073/PNAS.0901447106
- T. LARSEN ET AL: "Micro string resonators as temperature sensors", AIP CONFERENCE PROCEEDINGS, vol. 1552, no. 2, 23 March 2012 (2012-03-23), pages 931-936, XP055101978, ISSN: 0094-243X, DOI: 10.1063/1.4819669
- LARSEN T ET AL: "Ultrasensitive string-based temperature sensors", APPLIED PHYSICS LETTERS, AMERICAN INSTITUTE OF PHYSICS, US, vol. 98, no. 12, 21 March 2011 (2011-03-21), pages 121901-121901, XP012139777, ISSN: 0003-6951, DOI: 10.1063/1.3567012
- SCHMID S ET AL: "Quality factor improvement of silicon nitride micro string resonators", IEEE 24TH INTERNATIONAL CONFERENCE ON MICRO ELECTRO MECHANICAL SYSTEMS (MEMS 2011), IEEE, US, 23 January 2011 (2011-01-23), pages 481-484, XP031982453, DOI: 10.1109/MEMSYS.2011.5734466 ISBN: 978-1-4244-9632-7
- PANDEY ASHOK ET AL: "Performance of an AuPd micromechanical resonator as a temperature sensor", APPLIED PHYSICS LETTERS, AMERICAN INSTITUTE OF PHYSICS, US, vol. 96, no. 20, 18 May 2010 (2010-05-18), pages 203105-203105, XP012131259, ISSN: 0003-6951, DOI: 10.1063/1.3431614

## Description

### FIELD OF THE INVENTION

The present invention relates to a micron-scale calorimeter and a calorimetry method utilizing the micron-scale calorimeter. In accordance with the invention, there is provided a micron-scale calorimeter comprising a micro-channel string, being restrained at least two longitudinally distanced positions so as to form a free released double clamped string in-between said two longitudinally distanced positions said micro-channel string comprising a microfluidic channel having a closed cross section and extending in the longitudinal direction of the hollow string, acoustical means adapted to oscillate the string at different frequencies by emitting sound waves towards the string, optical means adapted to detect oscillating frequencies of the string, and controlling means controlling the strength and frequency of the sound wave emitted by the acoustical means and receiving a signal from the optical means representing the detected oscillating frequencies of the micro-channel string.

### BACKGROUND OF THE INVENTION

Calorimeters are today used in numerous different ways for different purposes. Calorimeters in the micron-sized range, is for example used to estimate an exothermic reaction by mixing two or more chemicals and used to detect an activity of bio cells.Wonhee Lee, Warren Fon, Blake W. Axelrod, and Michael L. Roukes "High-sensitivity microfluidic calorimeters for biological and chemical applications", Proceedings of the National Academy of Sciences, 2009, vol. 106, n° 36, p.15225-15230, ISSN: 0027-8424, discloses some details as to known calorimeters.

Current technology employs a design where a void - being sealed to prevent out- and inflow to the void of substance - is used and the substance to be examined is present inside the void. Heat produced in by the substances gives rise to a temperature change in the material surrounding the void. The known design employs a thermopile (made of a material with a temperature dependent resistance) and an electrical heat source, to perform calorimetry at a desired temperature. Thus, by measuring the resistance of the thermopile an indication of e.g. the exothermic reaction or the activity of bio cells can be obtained.

One such example is disclosed in Review of Scientific Instruments 79, 064901 (2008): Real-time thermal characterization of 12 nl fluid samples in a micro channel. This document discloses a sensor having a structure composed of a micro channel and a thin-film strip fabricated on a glass substrate. The thin-film acts as both an electrical heater and an electrical resistance based thermometer and detects the temperature response at a 3ω frequency, i.e. the tripled frequency of heating.

Such a system has a number of drawbacks. For instance, for the electrical heating measuring, metal electrodes must be applied close to the site where heat is being generated. Further, the resistance of the metal layer which changes with temperature/heat must be monitored. But at the same time, metal layer also becomes a source to conduct heat away from its origin. Which means that metal electrodes cause both a loss of heat, production of heat and are used to determine resistance (correlated to the thermal properties to be determined), thereby providing error sources into the measurement. Furthermore, as steady state often is not a possibility the transient state or - in general - the unsteady behavior of the system has to be taken into consideration. Such consideration involves handling of heat transfer being different in different materials.

Hence, an improved calorimeter device and method for determining calorimetric properties of samples in the micro or nano volume range would be advantageous, and in particular a more efficient and/or reliable calorimeter device and method would be advantageous.

### OBJECT OF THE INVENTION

It is a further object of the present invention to provide an alternative to the prior art.

In particular, it may be seen as an object of the present invention to provide a micron-scale calorimeter that solves the above mentioned problems of the prior art with

In particular, it may be seen as an objective of the present invention to provide a calorimeter, such as a chip calorimeter, which employs a vibrating micro string as a temperature sensor thus avoiding use of a thermopile which also causes a loss of minute amount heat by using conductive metal layers. This helps in solving problems mentioned earlier in the prior art.

### SUMMARY OF THE INVENTION

Thus, the above described object and several other objects are intended to be obtained in a first aspect of the invention by providing a micron-scale calorimeter comprising:
- micro-channel string being restrained at least two longitudinally distanced positions so as to form a free released double clamped string in-between said two longitudinally distanced positions, said micro-channel string comprising a microfluidic channel having a closed cross section and extending in the longitudinal direction of the hollow string,
- acoustical means adapted to oscillate the string at its resonance frequency by emitting sound waves in the vicinity of the string,
- optical means adapted to detect oscillating frequencies of the string, and
- controlling means adapted to control the strength and frequency of the sound wave emitted by the acoustical means and to receive a signal from the optical means representing the detected oscillating frequencies.

As there exist a correlation between the oscillating frequency of the string and the heat generated in the micron-scale calorimeter according to the present invention, such calorimeter may be applied for numerous purposes. A micron-scale calorimeter according to the invention may successfully identify different substances based on the detected oscillating frequencies (as these may be seen as a unique finger print for each substance). A micron-scale calorimeter according to the invention may also be used to monitor activities of bio cells due to their production of heat during growth. Additionally chemical reaction by mixing minute amounts (picoliters) of two different chemicals (compatible to the material of the device) can also be monitored by a micron-scale calorimeter according to the present invention.

In the present context, terms are used in a manner being ordinary to a skilled person. However, some the used terms are explained in some details below:
*Micron-scale* or *micro-sized* is preferably used to denote element(s) having a size in the micron meter range scale i.e. having dimension in the range of 10⁻⁶ m.
*Micro-channel string* is preferably used to denote string having a longitudinal extension in the micron meter range as well as having cross section in the micron meter range. Further, micro-channel string is preferably used to denote a string having a microfluidic channel having a closed cross section and extending in the longitudinal direction of the hollow string, which channel is tubular shaped in the sense that it is not open to exterior of the string except at inlet(s)/outlet(s) arranged at the distal ends of the channel.

*Free released double clamped* is preferably used to denote that the string is supported at its two longitudinal distances positions (ends) and hanging (free released) in the middle.

*A string* is preferably used to mean an elongated member. The elongated member may advantageously be under tensile intrinsic stress, preferably introduced by a thin film of silicon rich silicon nitride (SRN), which means something is pulling it from its both ends. In relation to the present invention, the longitudinal stress on string may be around 200 MPa (Mega Pascal).

*Microfludic* is preferably used to denote a volume in the micro litre range

*Microfluidic channel* is preferably used to denote a channel provided inside the micro-channel string having a total volume in the micro litre range.

*Nano-scale* or *nano-sized* is preferably used to denote element(s) having a size in the nano meter range scale, i.e. having dimensions in the range of 10⁻⁹ m. *Calorimeter* is preferably used to mean a device adapted to provide a detectable signal, e.g. a change in resonance frequency, correlated to change of heat in a substance.

*Chip calorimeter* is preferably used to mean a calorimeter embodied in a small element e.g. a 1cm x 1cm element. Such a chip calorimeter may preferably be adapted to fit exchangeable into a measuring device and comprise interface mating a corresponding interface of the measuring device, whereby easy integration of the chip calorimeter may be achieved.

A micron scale calorimeter according to the present invention may advantageously be used inter alia to estimate an exothermic reaction by mixing two chemicals. Additionally, it can also be used to detect an activity of bio cells. Generally when bio cells grow they emit heat which can be detected by micron scale calorimeter according to the present invention. A micron scale calorimeter according to the invention can furthermore be used as a chip calorimeter.

The resonance frequency of a string depends inter alia upon the moment of inertia and material properties of a resonating structure. For a sensor, the moment of inertia should advantageously remain constant during a sensing operation. However, material properties may change because of some external or internal effects like temperature and stress. When temperature changes, stress in a string (under a tensile stress) changes which affects stiffness of a structure thus changing the resonance frequency. Thus, while material properties could be more dominant factor during a sensing operation of a sensor, a calorimeter device according to the present invention is typically and preferably designed so that the dimensions of the string are more dominant than the material properties.

Accordingly, the string is preferably made from a material or a selection of materials with a low heat capacity, so that once a heat is generated by some source inside the string, the material of the string would absorb that heat and quickly transfer it to its surroundings. This has more likely to cause an expansion in the material thus a higher change in the resonance frequency.

The present invention relates in a second aspect to a calorimetry method using a micron scale calorimeter according to the first aspect of the invention. The method preferably comprising
- emitting sound waves at different frequencies thereby vibrating the string by use of the acoustical means,
- detecting by use of the optical means, the resonance frequency of the string.

The first and second aspect of the present invention may each be combined with any of the other aspects. These and other aspects of the invention will be apparent from and elucidated with reference to the embodiments described hereinafter.

It is noted that a calorimeter according to the present invention may be suitable for any application which would cause heat generation inside the micro fluidic channel of a string.

### BRIEF DESCRIPTION OF THE FIGURES

The present invention and in particular preferred embodiments thereof will now be disclosed in connection with the accompanying drawings. The drawings show ways of implementing the present invention and are not to be construed as being limiting to other possible embodiments falling within the scope of the attached claim set.
Figure 1 discloses schematically a micro-scale calorimeter according to a first embodiment of the present invention,
Figure 2 discloses schematically oscillation performed by a micro-channel string of a micro-scale calorimeter according to the present invention,
Figure 3 discloses a micro-channel string according to a preferred embodiment of the invention; the micro-channel string is shown as seen from above in the left side of figure 3 and in a cross sectional view in the right side of figure 3, in a side view in the bottom of figure 3 and in a 3D view,
Figure 4 shows an embodiment of a micro-channel string according to the present invention, and
Figure 5 shows further details as to the embodiment of the micro-channel string shown in figure 5.

### DETAILED DESCRIPTION OF AN EMBODIMENT

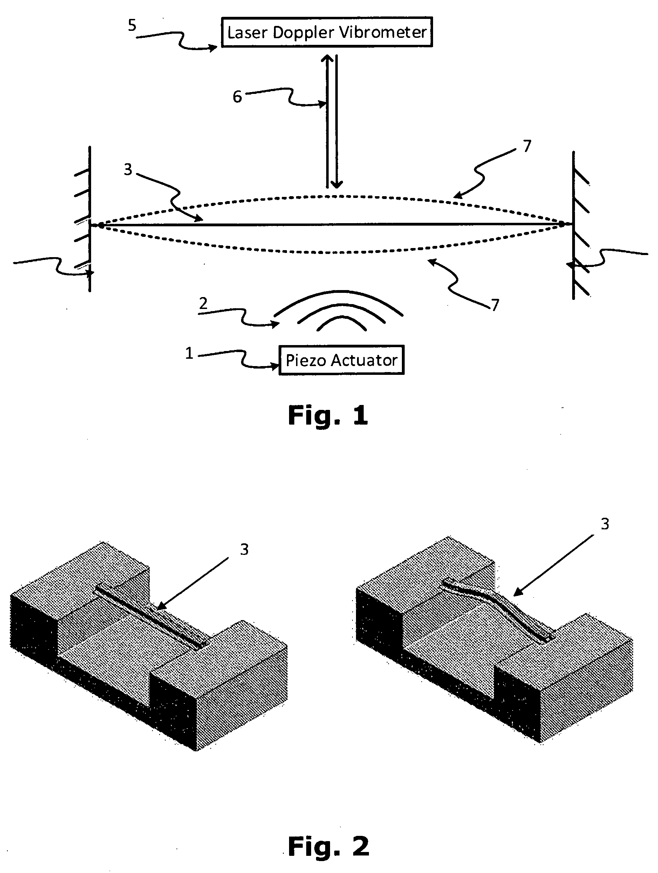

Reference is made to fig. 1 which shows schematically a micron-scale calorimeter. The micron-scale calorimeter comprising a micro-channel string which is made from a material with an elasticity module E depending on the temperature of the material.

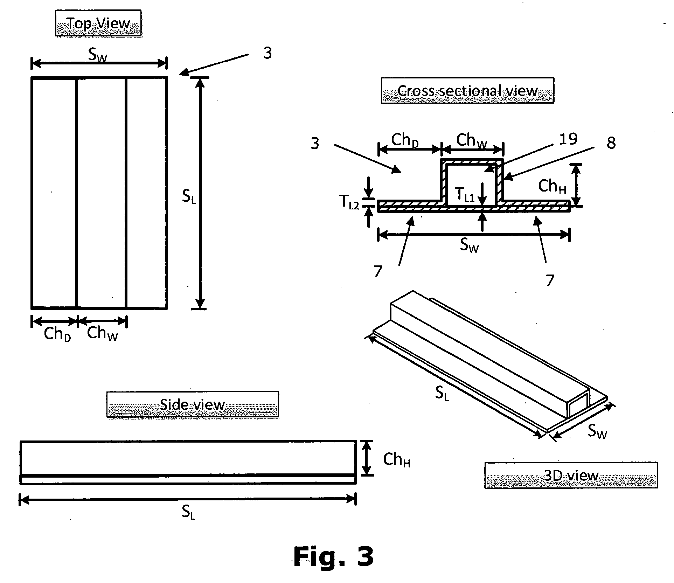

As indicated on the figure, the micron-scale calorimeter comprises a micro-channel string 3. This micro-channel 3 is shaped as an elongated member as will be described in further details in connection with fig. 3 and forms a void extending substantially in the full length of the micro-channel string 3 thereby forming microfluidic channel extending inside micro channel string 3. The void is open to the exterior only at the distal ends of the micro-channel string by the micro-channel string 3 comprising openings at these positions.

The void serves the purpose of containing the substance to be measured by the micron scale calorimeter. At least two modes of use of the calorimeter can be employed; one where the substance is contained in the void and the openings in the void are closed during measurements and another mode where the one of openings is connected to substance reservoir delivering substance and the remaining opening connected to a receiving receptacle. Thereby, a mode may be possible during which the calorimeter is used for e.g. a streaming sample through the micron scale calorimeter, streaming two or more streams through the micro scaled calorimeter which may include mixing the two or more streams prior to entering the micro-channel string or while present in the micro-channel.

The micro-channel 3 is restrained at least two longitudinally distanced positions (typically being the distal ends of the micro string 3) by use of support elements 4. In figure 1, these support elements 4 are shown as of a type clamping the string thereby imposing moments in the strings during bending of the micro-channel string 3, but other types may be preferred. Thereby, the micro-channel string 3 forms a string being free released double clamped in-between said two longitudinally distanced support elements 4 and as disclosed above, the micro-channel string3 is formed as a hollow string comprising a microfluidic channel having a closed cross section and extending in the longitudinal direction of the hollow string.

A concept behind the present invention is based on that the micro-channel string 3 has a resonance frequency depending on the temperature of the micro-channel string 3 and that the temperature of the micro-channel string 3 is governed - or at least influenced - by exothermic or endothermic reactions in the substance contained inside the micro-channel. This means that the invention resides inter alia in that a correlation between the parameter(s) to be determined and the resonance frequency exist and if the resonance frequency can be determined so can the parameter(s).

In some preferred embodiments of the micron-scale calorimeter, the string is pre-stressed so that the string has a longitudinal tension in between the two longitudinally distanced positions. This may be used to set the resonance frequency of the string within another range than if the string is not pre-stressed.

To strike the resonance frequency of the micro-channel string 3 acoustical means in the form of a loud speaker 1 is applied. In some preferred embodiments, the acoustical means adapted to oscillate the string comprising a piezo actuator. A piezo actuator is easy to use due to its size (typically dimensions are 5mm x 5mm x 2mm). The loud speaker - or in general the acoustical means adapted to oscillate the string - is connected to a controllable source of alternating current (not shown in fig. 1) so that sound waves having distinct and well defined frequency can be emitted by the loud speaker 1. The loud speaker is arranged above the micro-channel string 3 so as to emit sound waves in a direction being perpendicular to the longitudinal extension of the micro-channel string 3 thereby vibrating the micro-channel string 3. The frequency of the sound wave for a micri-channel string as disclosed in the table below (MS-8 and MS-16) may typically be selected between 100kHz and 200kHz. However, the actual frequency/frequencies depends inter alia on the actual selection of dimension and material and may therefore be different from between 100kHz and 200kHz.

Once the frequency of sound waves matches with the resonance frequency of a micro-channel string 3, its vibrational amplitude increases substantially as compared to a string not being excited by a loud speaker (piezo actuator). The oscillations and in particular the frequency of the oscillations are detected by use of optical detector means 5. A mode of oscillation of the micro-channel string 3 is shown schematically in fig. 2, where the left hand picture shows the micro-channel string 3 at rest and the right hand picture shows a bending mode of the micro-channel string 3 occurring during oscillation.

A micron-scale calorimeter according to the present invention may further comprise controlling means controlling the strength and frequency of the sound waves emitted by the loud speaker and receiving a signal from the optical means representing the detected oscillating frequencies.

A calorimeter according to the present invention further comprising or makes use of optical means 5 adapted to detect the resonance frequency of the free released double clamped string. Typically and preferably, such optical means 5 comprising a laser Doppler vibrometer (LDV) which detects amplitude as well as frequency of the vibrating micro-channel string 3.

Reference is made to figure 3 which shows a micro-channel string 3 according to a preferred embodiment of the invention; the micro-channel string 3 is shown as seen from above (labelled Top View), in a cross sectional view (labelled Cross section view), in side view (labelled Side view) and finally in a three dimensional view (labelled 3D view).

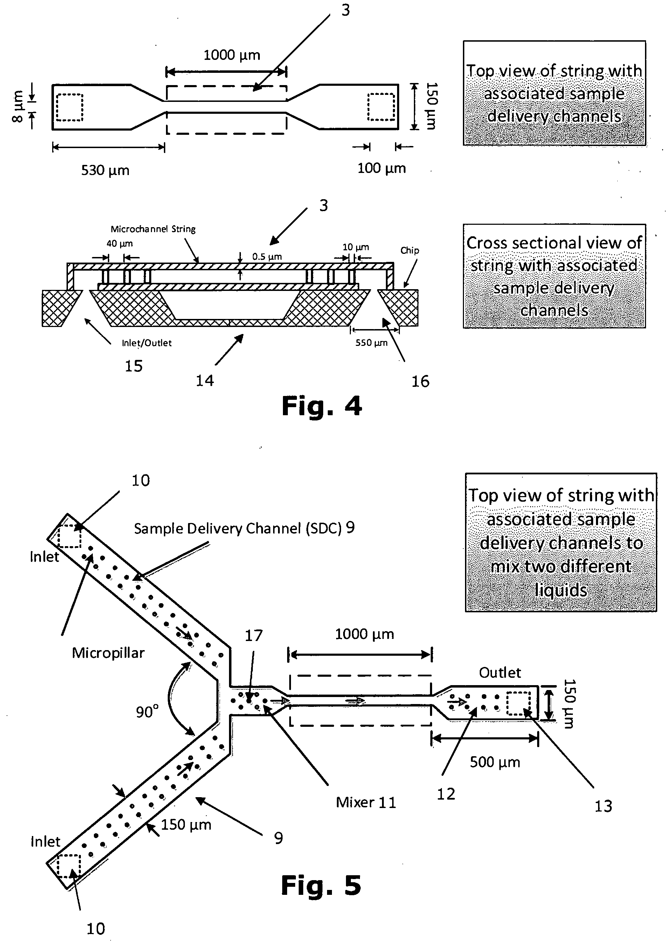

As shown in figure 3, the cross section of the string is constant through-out the length of micro-channel string 3. The string is considered to have the length S_{L} and, as will be disclosed in connection with e.g. figure 4 below, may comprise elements located at both ends of the micro-channel string 3. As shown in figure 3, the cross section of the microfluidic channel 19 is square-shaped. A Reynolds number may accordingly be based on the hydraulic diameter of the microfluidic channel 19.

As also disclosed in figure 3, the micro-channel string 3 has a cross section being T-shaped with a web 8 and two flanges 7 extending from the web 8, and wherein the microfluidic channel 19 is provided in the web 8. The micro-channel string 3 is typically made as a layered construction as also indicated in figure 3, where a first layer defines a lower part of the micro-channel string 3 formed as a straight sheet of material, and the upper layer defined an upper part of the micro-channel string 3 including the cross section.

Typical and non-limiting dimensions of two designs of micro-channel strings 3 are (all dimensions are in µm):

| **Parameters** | **Symbol** | **MS-8** | **MS-16** |
|---|---|---|---|
| String length | S_{L} | 1000 | 1000 |
| String width | S_{W} | 24 | 32 |
| Thickness of layer-1 | T_{L1} | 0.5 | 0.5 |
| Thickness of layer-2 | T_{L2} | 0.5 | 0.5 |
| Channel thickness | Ch_{T} | 0.5 | 0.5 |
| Channel height | Ch_{H} | 4 | 3 |
| Channel distance (from edge) | Ch_{D} | 8 | 8 |
| Channel width | Ch_{W} | 8 | 16 |

In the above table, "Symbol" refers the symbols used in fig. 3, MS-8 and MS-16 are identifiers used to reference two different embodiments where for example MS-8 means a micro-channel string with a channel width of 8 µm.

Reference is made to figure 4 and 5. Figure 4 shows an embodiment of a micro-channel string 3 (upper part of fig. 4) according to the present invention including sample delivery channel 9, inlets 10, mixer 11, outlet channel 12 and outlet 13 (lower part of fig. 4).

As shown in figure 4 and 5, two sample delivery channels 9 each having a separate inlet 10 is provided in the embodiment shown. The two channels 9 are shaped as straight channels angled 90° and merge at the mixer 11. As can be seen by comparing figure 4 with 5, the two sample delivery channels 9 extend below the plane of the micro-channel string 3 so that the fluid flowing through the two sample delivery channels 9 leaves the channels upwardly through the tapering inlet provided in a support element 14 on which the micro-channel string 3 is arranged. In figure 4, the inlet 15 is labelled "inlet/outlet" as combination of support element 14 with micro-channel string 3 in the embodiment shown is axis symmetrical along the longitudinal direction of the micro-channel string 3 and the longitudinal orientation of the micro-channel string 3 may thus be reversed. Please note that the position of inlet/outlet shown in figure 4 does not correspond exactly to those shown in figure 4 (due to the schematically nature of the drawings). In practise, e.g. the outlet 13 should be positioned above the outlet 16 provided in the chip 14.

Thus, in use feeding means (not shown) for feeding one or more liquid into the microfluidic channel 19 (figure 2) is operated whereby fluid enters into the sample delivery channels 9. Care should be taken to assure that fluid flowing through one of the channels 9, say the upper one of figure 5, is not forced into the other sample delivery channel 9. This may be the situation if the feeding means does not balance the flow in the sample delivery channels 9 to the local hydraulic resistances (in the microfluidic channel and the sample delivery channels 9).

As shown in details in figure 4, a micron-scale calorimeter according to the present invention may comprises a mixer 11 defining a mixing zone arranged upstream of the microfluidic channel 19 (figure 2) and being adapted to receive liquids from separate liquid sources through the sample delivery channels 9 and mix the separate liquids into a mixed liquid. A source for the design of this mixer can be found in Y. Lin, G.J. Gerfen, D.L. Rousseau, and S.R. Yeh. Ultra fast micro fluidic mixer and freeze-quenching device. Analytical chemistry, 75(20):5381-5386, 2003*.*

The requirement imposed on a mixer 11 was to mix two fluids in the form of two different solutions. The mixing aimed at was mixing by diffusive mixing before the fluids enter into the microfluidic channel 19 of the micro-channel string 3. The mixer 11 take up a certain volume (the interior volume of the mixer) and it was found that by reducing volume of a mixing chamber, speed of mixing can be improved but as a result this also decreases Reynolds number thus increasing laminar flow of a liquid. Laminar flow was not desired for mixing, so by increasing flow speed, quick mixing can be achieved.

An embodiment of a mixer 11 is shown in figure 5, The mixer 11 (excluding its tapered outlet section) has an internal length of 100 µm and a width of 50 µm; it is noted that the tapered outlet section following downstream of the straight part of the mixer although considered part of the mixer does not contributed substantially to the mixing. In the mixer micro pillars 17 (cylindrical elements with a diameter of 10 µm and extending the full height of the mixer 11) are the mixing elements which introduce downstream turbulent eddies to ensure efficient mixing of two solutions. With a total amount of sample flowing through sample delivery channels 9 and to the mixer 11 of 20 µL/s, the mixer 11 was found to have an efficiency of 20 µs as a mixing time (i.e. the time to achieve a homogeneous mixed fluid).

Another embodiment of a mixer 11 implemented by mixing elements being square shaped protrusion in the sidewall of the mixer 11. Such mixing elements extend the full height of the mixer 11and are square protrusions (10 µm x 10 µm, width x length) which are found to be an efficient source to disturb a laminar flow of samples inside the chamber and thereby provide a mixing. A source for the design of this mixer can be found in S.H. Wrong, P. Bryant, M. Ward, and C. Wharton. Investigation of mixing in a cross-shaped micromixer with static mixing elements for reaction kinetics studies. Sensors and Actuators B: Chemical, 95(1):414-424 2003*.*

As also indicated in fig. 5, micro pillars (as those implemented in the mixer 11) may be located in the sample delivery channels 10 as well as in the outlet 12.

A string according to preferred embodiments of the invention is made from a material having a heat capacity lower than 1000 J/kg*K, such as lower than 900 J/kg*K, preferably lower than 800 J/kg*K. Preferably, the string is made from SRN with a heat capacity of around 691 J/kg K. Additionally SRN is transparent to normal light which facilitate a visual inspection of contents in a micro-channel.

Although a micron-scale calorimeter according to the present invention may be used without placing it in an actively controlled atmosphere, it may be advantageously to arranged at least the part of the micro-channel string in-between the two longitudinally distanced positions in vacuum to reduce air damping, or a mass reduced atmosphere.

## Claims

1. A micron-scale calorimeter **characterised in that** it comprises:
- a micro-channel string (3) being restrained at at least two longitudinally distanced positions so as to form a free released double clamped string in-between said two longitudinally distanced positions said micro-channel string comprising a microfluidic channel having a closed cross section and extending in the longitudinal direction of the hollow string,
- acoustical means (1) adapted to oscillate the string at different frequencies by emitting sound waves towards the string,
- optical means (5) adapted to detect oscillating frequencies of the string, and
- controlling means adapted to control the strength and frequency of the sound wave emitted by the acoustical means and to receive a signal from the optical means representing the detected oscillating frequencies.
- wherein: the resonance frequency of said micro-channel string depends on its temperature and its temperature is governed - or at least influenced - by exothermic or endothermic reactions in the substance contained inside it.

2. A micron-scale calorimeter according to claim 1, wherein the optical means adapted to detect the resonance frequency of the free released double clamped string comprising a laser Doppler vibrometer.

3. A micron-scale calorimeter according to claim 1 or 2, wherein the means adapted to vibrate the string comprising a piezo actuator

4. A micron-scale calorimeter according to any of the preceding claims, wherein the string is pre-stressed in between the two longitudinally distanced positions.

5. A micron-scale calorimeter according to any of the preceding claims, wherein the cross section of the string is constant through-out the string.

6. A micron-scale calorimeter according to claim 1 or 2, wherein the cross section of the microfluidic channel is square-shaped.

7. A micron-scale calorimeter according to any of the preceding claims, wherein the string has a cross section being T-shaped with a flange and a web, and wherein the microfluidic channel is provided in the web.

8. A micron-scale calorimeter according to any of the preceding claims, further comprising feeding means for feeding one or more liquid into the microfluidic channel.

9. A micron-scale calorimeter according to claim 8, further comprising a mixing zone arranged upstream of the microfluidic channel and being adapted to receive liquids from separate liquid sources and mix the separate liquids into a mixed liquid.

10. A micron-scale calorimeter according to any of the preceding claims, wherein the string is made from a material having a heat capacity lower than 1000 J/kg*K, such as lower than 900 J/kg*K, preferably lower than 800 J/kg*K.

11. A micron-scale calorimeter according to claim 10, wherein the string is made from silicon nitride with a heat capacity of around 691 J/kg*K.

12. A micron scale calorimeter according to any of the preceding claims, wherein at least the part of the string in-between the two longitudinally distanced positions is arranged in vacuum to reduce air damping, or a mass reduced atmosphere.

13. A calorimetry method using a micron scale calorimeter according to any of the preceding claims, the method comprising
- emitting sound waves at different frequencies thereby vibrating the string by use of the acoustical means,
- detecting by use of the optical means, the resonance frequency of the string
- arranging a fluid, such as a liquid, in the micro-channel string.

14. A calorimetry method according to claim 13, wherein the method of arranging a fluid in the micro-channel string comprising streaming the fluid through an inlet provided in the micro-channel string.

15. A calorimetry method according to claim 13 or 14 wherein the fluid is a mix or becomes a mix of two or more fluid while present in the micro channel string.

## Patentansprüche

1. Mikronbereichkalorimeter, **dadurch gekennzeichnet, dass** es umfasst:
- einen Mikrokanal-Strang (3), der an mindestens zwei in Längsrichtung beabstandeten Positionen festgehalten wird, um so einen frei oszillierenden doppelt eingespannten Strang zwischen zwei in Längsrichtung beabstandeten Positionen auszubilden, wobei der Mikrokanal-Strang einen Mikrofluid-Kanal mit einem geschlossenen Querschnitt umfasst, der sich in der Längsrichtung des hohlen Strangs erstreckt,
- akustische Mittel (1), die dazu beschaffen sind, den Strang durch Senden von Schallwellen zum Strang mit verschiedenen Frequenzen zu oszillieren,
- optische Mittel (5), die dazu beschaffen sind, Oszillationsfrequenzen des Strangs zu erfassen, und
- Steuermitteln, die dazu beschaffen sind, die Stärke und Frequenz der von den akustischen Mitteln gesendeten Schallwellen zu steuern und ein Signal von den optischen Mitteln zu empfangen, das die erfassten Oszillationsfrequenzen repräsentiert,
wobei die Resonanzfrequenz des Mikrokanal-Strangs von dessen Temperatur abhängig ist und dessen Temperatur durch exotherme oder endotherme Reaktionen der darin enthaltenen Substanz bestimmt - oder mindestens beeinflusst - wird.

2. Mikronbereichkalorimeter nach Anspruch 1, wobei die optischen Mittel, die zum Erfassen der Resonanzfrequenz des frei oszillierenden doppelt eingespannten Strangs beschaffen sind, ein Laser-Doppler-Mikrometer umfassen.

3. Mikronbereichkalorimeter nach Anspruch 1 oder 2, wobei die Mittel, die zum Vibrieren des Strangs beschaffen sind, ein Piezo-Aktuator umfassen.

4. Mikronbereichkalorimeter nach einem der vorhergehenden Ansprüche, wobei der Strang zwischen den zwei in Längsrichtung beabstandeten Positionen vorgespannt ist.

5. Mikronbereichkalorimeter nach einem der vorhergehenden Ansprüche, wobei der Querschnitt des Strangs über den gesamten Strang gleichbleibend ist.

6. Mikronbereichkalorimeter nach Anspruch 1 oder 2, wobei der Querschnitt des Mikrofluid-Kanals quadratisch ist.

7. Mikronbereichkalorimeter nach einem der vorhergehenden Ansprüche, wobei der Strang einen T-förmigen Querschnitt mit einem Flansch und einem Steg aufweist und wobei der Mikrofluid-Kanal in dem Steg ausgebildet ist.

8. Mikronbereichkalorimeter nach einem der vorhergehenden Ansprüche, weiterhin umfassend Einspeisemittel zum Einspeisen eines oder mehrerer Flüssigkeiten in den Mikrofluid-Kanal.

9. Mikronbereichkalorimeter nach Anspruch 8, weiterhin umfassend eine vor dem Mikrofluid-Kanal angeordnete Mischzone, die dazu beschaffen ist, Flüssigkeiten aus getrennten Flüssigkeitsquellen zu erhalten und die getrennten Flüssigkeiten zu einer Flüssigkeitsmischung zu vermischen.

10. Mikronbereichkalorimeter nach einem der vorhergehenden Ansprüche, wobei der Strang aus einem Werkstoff mit einer Wärmekapazität von weniger als 1000 J/kg*K, wie weniger als 900 J/kg*K, vorzugsweise weniger als 800 J/kg*K hergestellt ist.

11. Mikronbereichkalorimeter nach Anspruch 10, wobei der Strang aus Siliziumnitrid mit einer Wärmekapazität von etwa 691 J/kg*K hergestellt ist.

12. Mikronbereichkalorimeter nach einem der vorhergehenden Ansprüche, wobei mindestens ein Teil des Strangs zwischen den zwei in Längsrichtung beabstandeten Positionen in Vakuum angeordnet ist, um Luftdämpfung zu reduzieren, oder in einer massenreduzierten Atmosphäre.

13. Kalorimetrisches Verfahren unter Verwendung eines Mikronbereichkalorimeters nach einem der vorhergehenden Ansprüche, wobei das Verfahren umfasst:
- Senden von Schallwellen mit verschiedenen Frequenzen zum Vibrieren des Strangs unter Verwendung der akustischen Mittel,
- Erfassen der Resonanzfrequenz des Strangs unter Verwendung der optischen Mittel,
- Anordnen eines Fluids, wie einer Flüssigkeit, in dem Mikrokanal-Strang.

14. Kalorimetrisches Verfahren nach Anspruch 13, wobei das Verfahren zum Anordnen eines Fluids in dem Mikrokanal-Strang das Strömen des Fluids durch einen im Mikrokanal-Strang ausgebildeten Einlass umfasst.

15. Kalorimetrisches Verfahren nach Anspruch 13 oder 14, wobei das Fluid eine Mischung aus zwei oder mehr Fluiden ist oder während deren Aufenthalts im Mikrokanal-Strang wird.

## Revendications

1. Calorimètre à échelle micrométrique, **caractérisé en ce qu'**il comprend :
- une corde (3) à micro-canal retenue en au moins deux positions longitudinalement espacées de façon à former une corde à vibration libre et á double verrouillage entre lesdites deux positions longitudinalement espacées, ladite corde à micro-canal comprenant un canal microfluidique ayant une section transversale fermée et s'étendant dans la direction longitudinale de la corde creuse,
- des moyens acoustiques (1) conçus pour faire osciller la corde à différentes fréquences par émission d'ondes sonores en direction de la corde,
- des moyens optiques (5) conçus pour détecter des fréquences d'oscillation de la corde, et
- des moyens de commande conçus pour commander la puissance et la fréquence de l'ondes sonores émises par les moyens acoustiques et pour recevoir un signal depuis les moyens optiques représentant les fréquences d'oscillation détectées,
dans lequel la fréquence de résonance de ladite corde à micro-canal dépend de sa température et sa température est contrôlée, ou au moins influencée, par des réactions exothermiques ou endothermiques dans la substance contenue à l'intérieur.

2. Calorimètre à échelle micrométrique selon la revendication 1, dans lequel les moyens optiques conçus pour détecter la fréquence de résonance de la corde à vibration libre et á double verrouillage comprend un vibromètre Doppler à laser.

3. Calorimètre à échelle micrométrique selon la revendication 1 ou 2, dans lequel les moyens conçus pour faire vibrer la corde comprennent un actionneur piézo-électrique.

4. Calorimètre à échelle micrométrique selon l'une quelconque des revendications précédentes, dans lequel la corde est pré-contrainte entre les deux positions longitudinalement espacées.

5. Calorimètre à échelle micrométrique selon l'une quelconque des revendications précédentes, dans lequel la section transversale de la corde est constante sur toute la corde.

6. Calorimètre à échelle micrométrique selon la revendication 1 ou 2, dans lequel la section transversale du canal microfluidique est de forme carrée.

7. Calorimètre à échelle micrométrique selon l'une quelconque des revendications précédentes, dans lequel la corde présente une section transversale en forme de T avec une bride et une âme, et dans lequel le canal microfluidique est prévu sur l'âme.

8. Calorimètre à échelle micrométrique selon l'une quelconque des revendications précédentes, comprenant en outre des moyens d'alimentation destinés à alimenter le canal microfluidique en au moins un liquide.

9. Calorimètre à échelle micrométrique selon la revendication 8, comprenant en outre une zone de mélange disposée en amont du canal microfluidique et conçue pour recevoir des liquides provenant de sources de liquides séparées et mélanger les liquides séparés en un liquide mélangé.

10. Calorimètre à échelle micrométrique selon l'une quelconque des revendications précédentes, dans lequel la corde est faite en un matériau présentant une capacité thermique inférieure à 1000 J/kg*K, par exemple inférieure à 900 J/kg*K, de préférence inférieure à 800 J/kg*K.

11. Calorimètre à échelle micrométrique selon la revendication 10, dans lequel la corde est faite en nitrure de silicium d'une capacité thermique égale à environ 691 J/kg*K.

12. Calorimètre à échelle micrométrique selon l'une quelconque des revendications précédentes, dans lequel au moins la partie de la corde se trouvant entre les deux positions longitudinalement espacées est disposée dans le vide afin de réduire l'amortissement de l'air, ou une atmosphère à masse réduite.

13. Procédé de calorimétrie utilisant un calorimètre à échelle micrométrique selon l'une quelconque des revendications précédentes, le procédé comprenant:
- émettre des ondes sonores à différentes fréquences afin de faire vibrer la corde au moyen desdites moyens acoustiques,
- détecter au moyen desdites moyens optiques la fréquence de résonance de la corde,
- disposer un fluide, tel qu'un liquide, dans la corde à micro-canal.

14. Procédé de calorimétrie selon la revendication 13, dans lequel le procédé de disposition d'un fluide dans la corde à micro-canal comprend faire circuler le fluide par un orifice d'entrée prévu dans la corde à micro-canal.

15. Procédé de calorimétrie selon la revendication 13 ou 14, dans lequel le fluide est un mélange ou devient un mélange de deux fluides ou plus présents dans la corde à micro-canal.
